# EUROPEAN PATENT APPLICATION

(11) **EP 4 167 462 A1**
(43) Date of publication of application: **19.04.2023**
(21) Application number: 19954241.6
(22) Date of filing: 26.11.2019
(51) Int. Cl.: H02N 2/00, H02N 11/00, H01M 6/02, H01M 14/00

(54) **CHEMO-ELECTRONIC CONVERTER BASED ON ZRO2 - 3 MOL% Y2O3 NANOPOWDERS**

(71) Applicant: Cascatachuva, Lda, 2805-336 Almada (PT)
(72) Inventor: SHYLO, Artem, Kyiv 03179 (UA); DOROSHKEVICH, Oleksandr, Dubna 141985 (RU); ZELENYAK, Tatyana, Dubna 141982 (RU); KONSTANTINOVA, Tetyana, Kyiv 04123 (UA); LYUBCHYK, Svitlana, 2815-630 (PT); LYUBCHYK, Sergiy, 2820-598 (PT); LYUBCHYK, Andriy, 2815-730 (PT); LYGINA, OIena, 2815-730 (PT)
(74) Representative: Patentree
(86) International application number: PCT/UA2019/000147
(87) International publication number: WO 2021/107909

(57) **Abstract**

The invention relates to converters of surface moisture adsorption energy into electrical energy. The technical result of the invention is to enhance the specific characteristics of chemoelectronic converters. A chemoelectronic converter comprises a dielectric substrate, an electrode grid and a nanopowder coating based on a 1% aqueous solution of a polyvinyl alcohol polymer with a nanopowder of a solid solution with the composition ZrO₂ - 3 mol% Y₂O₃, which has a particle size of 7.5 nm, with a ratio of 1 g of power to 20 ml of solution, wherein said coating is produced by depositing drops of a nanopowder suspension that have the same size and shape, and the electrode grid is formed as localized cells in the form of paired contact pads with a size of 3x3 mm, each cell having an interelectrode gap of 1.5 mm, wherein the individual pairs of electrodes are connected in series-parallel.

## Description

The invention relates to alternative power industry, in particular to converters of energy of moisture adsorption by the surface into electrical energy.

Adsorption energy converters, both hydroelectric and chemoelectric ones, is a class of devices that convert the energy of exothermic processes of moisture adsorption on the surface of solid bodies into an electrical form, in which electrochemical (Faraday) processes are not implemented.

The idea of extracting electrical energy from atmospheric moisture has long inspired the scientific community. In a document [1], the presence of charge in water droplets is shown by means of a needle concentrator of the electrical field. The articles [2-3] studied the potential reliefs of the double electrical layer on non-crystalline silica films with aluminium phosphate particles using scanning Kelvin probe microscopy (SKPM). It is shown that the change in the absolute value of potential during adsorption is proportional to the value of atmospheric humidity and reaches 10 MV/m, and the process itself is dynamic in nature. It is also shown that the electrical double layer has a charge with different sign for different materials. It is assumed that charge transfer from the atmosphere occurs as a result of dissociation of water molecules into OH⁻ and H⁺ ions during adsorption on the surface.

In a document [4], it is established that at a humidity of more than 50 % the metals in the Faraday cage had charges with different signs. It is concluded that the atmosphere contains charge carriers in the form of OH⁻ and H⁺ ions, which transfer their charge through the metal surface by means of an oxide film with active centers on the surface. A mechanism of charge exchange by means of the Lewis and Bronsted centers on the surface of the oxide film is mentioned:

S + H₂O = S _{(OH}⁻₎ + H⁺ or S + H₂O = S _{(H}⁺₎ +OH⁻.

The documents [5-6] discuss a ballistic mechanism of the transfer of electrical energy to a semiconductor crystal, the electrical energy being released during a heterogeneous catalytic reaction on its metallized surface. When the film thickness is less than 20 nm, the so-called "hot electrons" with an energy of 1...3 eV ballistically, i.e. without energy loss, reach the Schottky barrier, overcome it with their kinetic energy and, entering the semiconductor, form an electrical current in an external circuit. At the present moment, various devices are developed worldwide that allow converting the potential energy of atmospheric moisture into an electric form, in particular, by electrostatic capture of charge from microscopic water droplets, as described in [7], through adsorption-induced electrostriction [8] and by means of other mechanisms [1-3, 6].

The documents [9-11] describe a mechanism of converting the energy of heterogeneous exothermic chemical reactions on the "front" surface of a semiconductor structure into an electrical form. According to the ideas developed in these articles, heterogeneous reactions between adsorbates on the surface of a semiconductor crystal, similarly to external electromagnetic radiation, induce localization of pairs of free charge carriers from the crystal lattice of the crystal, which are separated by a p-n junction field, forming an electrical current (chemicurrent) and EMF in the external circuit. This phenomenon, by analogy to photo-EMF [12], was called chemo-EMF (the prefix chemo-, just as photo-, emphasizes the non-thermal origin of the phenomenon). However, unlike the photo effect, the energy output in this kind of "chemoelectronic converter" is small: 10⁻³-10⁻⁵ electrons per chemical act [13].

All the aforesaid devices have an uncertain prospect for use due to their extremely low efficiency.

The main reasons for low conversion efficiency in this type of devices are a multistage nature of the energy conversion mechanism and the low specific area of the functional surface (or the former and the latter at the same time). In particular, in the case of the mechanism of electrostatic capture of charge from microscopic water droplets [7] or by adsorption-induced electrostriction [8], energy conversion in these systems involves an intermediate mechanical energy form, while in the case of chemoelectronic conversion [9-11] direct conversion is implemented, but the surface area is extremely small to obtain any significant power.

The object of the disclosed invention is to increase the specific characteristics (power, current density) of the adsorption energy converter implementing the operation principle of a chemoelectronic converter.

The device mentioned in the document [14] that implements the principle of direct conversion of chemical energy into an electric form and has a high specific surface area of the functional junction is adopted as a prototype. The chemoelectronic energy converter adopted as a prototype comprises a dielectric glass substrate with a size of 35 mm x 20 mm, a nanocomposite functional layer conformally arranged thereon and an electrode grid with an interdigital topology. The distance between the electrodes is 0.75 mm. The functional layer is obtained by spraying on a hot substrate (200 °C) a suspension based on a 1 % aqueous solution of a polyvinyl alcohol (PVA) polymer with a nanopowder of a solid solution with a composition of ZrO₂ - 3 mol% Y₂O₃ (YSZ, yttrium oxide stabilized zirconium dioxide) with a particle size of 7.5 nm in a ratio of 1 g of powder per 20 ml of solution. The metal electrodes are obtained by thermal spraying of aluminium in vacuum.

The nanopowders were obtained using chemical co-precipitation technology using physical influences [15]. An amorphous powder of zirconium hydroxide obtained from a chloride raw material was subjected to crystallization annealing at a temperature of 400 °C for 120 minutes after being dehydrated in a specialized microwave oven for 25 minutes at a temperature of 120 °C.

The prototype has a transformational mechanism of action. As a result of adsorption-induced phase transformation in the near-surface layers of YSZ nanoparticles, the crystal lattice ions are recharged, and, as a consequence, localization and surface emission of electrons occur, which is largely facilitated by distortion of energy levels in the zones, the distortion being specific to nanosized objects [16-17]. The specific surface area of functional heterojunction based on a nanopowder polymer composite, which exceeds the planar heterojunction area by 4-5 orders of magnitude, allows to substantially increase conversion efficiency compared to planar analogues as, for example [5].

However, given the spontaneous nature of the polarization of the functional medium, which is a polymer matrix, with volumetric electron emission, a significant length of the interelectrode gap substantially slows down the activation of charge transport to the electrodes and increases the uncertainty of the direction of the polarization vector relative to the electrodes. As a result, the device provided in [14] cannot achieve the design parameters due to a substantial proportion of recombination of charge carriers, has a high probability of change in polarity of the electrodes and an uncertainty of the limit electric parameters from cycle to cycle.

The object in the disclosed invention is achieved by the fact that the device is designed as a set of miniature discrete electrode cells coated with a nanopowder polymeric composite coating, which ensures the presence of a functional heterojunction. When the electrodes are connected in series-parallel, this structure allows to substantially increase the limit electrical parameters compared to the prototype.

The disclosed chemoelectronic converter comprises in its design a substrate made of a dielectric material, an electrode grid made of a material that has a metallic type of conductivity and is chemically and electrochemically inactive in the electrolyte formed by the interaction of water with the surface of nanoparticles, for example, gold or carbon, and a functional coating applied in a certain manner on it in the form of a nanocomposite suspension, which includes particles of a powder of a solid solution with a composition of ZrO₂ - 3 mol% Y₂O₃ with a diameter of 7.5 nm and a 1 % aqueous solution of PVA polymer in a ratio of 1 g of powder per 20 ml of solution.

The technical result of the invention is a 2-fold increase in the specific characteristics of adsorption generators of electrical energy of chemical type.

In the experimental sample of the disclosed chemoelectronic converter, for correct comparison, a substrate of the same type and area as in the prototype is adopted, namely a glass printed circuit board with a current-carrying bus in the form of a track of copper foil with a width of 3 mm. The electrode grid is produced by electrolytic deposition of gold, while discrete electrode cells are formed in the form of paired contact pads with a size of 3x3 mm each, with an interelectrode gap of 1.5 mm. A functional coating is obtained by applying round droplets of said nanocomposite suspension into the interelectrode gaps of the discrete cells, followed by drying with a blow dryer. The contact pads are connected to the current-carrying bus with silver glue. Each of such cells is a separate electrical element. At the same time, the isomorphism and the same size of suspension droplets allow for the uniformity of both the amplitude and the dynamic performance characteristics of individual cells, as well as their same polarity.

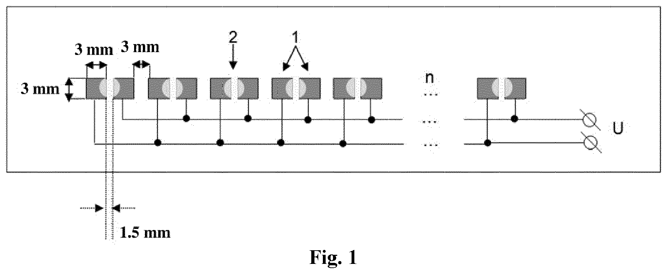

The disclosed invention is explained, but not limited to, by the drawing in Fig. 1, which shows a schematic representation of a chemoelectronic converter consisting of a set of discrete electrode cells with a functional coating of nanocomposite suspension, where 1 denotes electrodes of individual cells, 2 - a suspension droplet, n - number of cells, U - output voltage.

As shown in the diagram in Fig. 1, between the electrodes 1 of the discrete cells formed in an amount of n pairs of contact pads (in this case, n = 20), a functional coating 2 consisting of a nanocomposite suspension is applied in the form of a round droplet with a diameter of 5 mm. The size of each electrode is 3x3 mm, the interelectrode gap is 1.5 mm. The distance between the cells is 3 mm. The cells were connected to the collector electrodes taking into account their natural polarization. When operating with a load R = 100 kOhm, the resulting output voltage U is 25 mV. The total area S of the working surface equals about (3+3) x (6+1.5+3) x 20 = 6x10.5 x 20 = 210 x 6 =1260 mm² = 1260 10⁻⁶ m² = 1.26 10⁻³ m².

The design value of average specific electric power of the disclosed device <P> = *<U>²*/*RS* equals <P> = (25 10⁻³)² V²/ (10⁵ Ohm 1.26 10⁻³ m²) = 4.96 10⁻⁶ W/m². This exceeds by 2.15 times the power of the device adopted as a prototype, and more than by an order of magnitude exceeds the power of known functional analogues based on electrostatic capture of charge from microscopic water droplets (1.5 10⁻⁷ W/m²) [7] and adsorption-induced electrostriction (5.6 10⁻⁷ W) [8].

### LITERATURE

1. Leandra P. Santos, Telma R. D. Ducati, Lia B. S. Balestrin, and Fernando Galembeck* Water with Excess Electric Charge // J. Phys. Chem. C 2011, 115, 11226-11232. dx.doi.org/10.1021/jp202652q
2. Rubia F. Gouveia and Fernando Galembeck, Electrostatic Charging of Hydrophilic Particles Due to Water Adsorption // J. AM. CHEM. SOC. 2009, 131, 11381-11386, 9 11381.
3. Rubia F. Gouveia, Carlos A. R. Costa, and Fernando Galembeck*, Water Vapor Adsorption Effect on Silica Surface Electrostatic Patterning // J. Phys. Chem. C 2008, 112, 17193-17199.
4. Telma R. D. Ducati, Luís H. Simões, and Fernando Galembeck*, Charge Partitioning at Gas -Solid Interfaces: Humidity Causes Electricity Buildup on Metals // Langmuir 2010, 26 (17), 13763-13766. DOI: 10.1021/la102494k.
5. V. V. Styrov, S. V. Simchenko, Generation of chemo-EMF in nanosized structures with p-n junctions based on SiC // Reports of the National Academy of Sciences of Ukraine, 2013, No. 5, pp. 80-86.
6. Georgen B., Nienhaus H., Weinberg W. H., McFarland E., Chemically induced electronic excitations at metal surfaces // Science, - 2001. - 294. - P. 2521-2523.
7. N. Miljkovic, D. Preston, R. Enright and E. Wang, Jumping-droplet electrostatic energy harvesting // APPLIED PHYSICS LETTERS, 2014, V. 105, P.013111.
8. Mingming Ma, Liang Guo, Daniel G. Anderson and Robert Langer // Science, 11 January 2013: pp. 186-189.
9. Kabansky A. Y., Styrov V. V., A new means of chemical energy conversion by semiconductor // Advanced Materials for Energy Conversion II / Eds. D. Chandra, R. G. Bautista, L. Shlapbach, - Charlotte, USA: Publ. TMS, 2004, - P. 43-52.
10. Kabansky A. Y., Styrov V. V., Tyurin Yu. I., On the possibility of direct conversion of chemical energy into electrical energy in semiconductors // Letters to TPJ., - 1979. - 5, No. 14. pp. 833-836.
11. Styrov V. V., Simchenko S. V., Highly efficient generation of electron-hole pairs at the selenium p-n junction under the action of atomic hydrogen // Letters to JETP, - 2012. - 96. - No. 5-6, - pp. 343-346.
12. Fujishima A., Honda K., Electrochemical Photolysis of Water at a Semiconductor Electrode // Nature, 238, pp. 37-38; doi:10.1038/238037a0.
13. Zuppero A. et al., Pre-equilibrium chemical reaction energy converter // Pat. US 4667088, Publ. on 11.05.2003.
14. A. S. Doroshkevich, E. B. Askerov, A. I. Lyubchyk, A. V. Shylo, T. Yu. Zelenyak, A. I. Logunov, V. A. Glazunova, V. V. Burkhovetskiy, A. H. Islamov, A. A. Nabiev, V. A. Turchenko, V. Almasan, D. Lazar, M. Balasoiu, V. S. Doroshkevich, A. I. Madadzada, A. I. Beskrovny, V. I. Bodnarchuk, \ Yu. Yu. Bacherikov, B. I. Oksengendler, Direct transformation of the energy of adsorption of water molecules in electricity on the surface of zirconia nanoparticles // Applied Nanoscience, 2019 (DOI: 10.1007/s13204-019-00979-6)).
15. Konstantinova T. E., Danilenko I. A., Glazunova V. A., Volkova G. K., Gorban O. A. // Journal of nanoparticle research, 2011, V. 13, No. 9, P. 4015-4023.
16. Oksengendler B. L., Askarov B., Nikiforov V. N. // TPJ, 2014, Vol. 84, No. 10, p. 156.
17. Oksengendler B. L., Turaeva N. N. // Report of RAS, Physics, 2010. Vol. 434, No. 5, p. 609.

## Claims

1. A chemoelectronic converter comprising a dielectric substrate, an electrode grid and a nanopowder polymeric coating obtained by applying a suspension based on a 1 % aqueous solution of a polyvinyl alcohol polymer with a nanopowder of a solid solution with a composition of ZrO₂ - 3 mol% Y₂O₃ having a particle size of 7.5 nm in a ratio of 1 g of powder per 20 ml of solution, **characterized in that** the functional coating is obtained by applying nanopowder suspension drops that have the same size and shape, and the electrode grid is formed in the form of localized electrode cells in the form of paired contact pads with a size of 3x3 mm each, with an interelectrode gap of 1.5 mm, while the separate pairs of electrodes are connected in series-parallel.
